# EUROPÄISCHE PATENTSCHRIFT

(11) **EP 0 715 482 B1**
(45) Veröffentlichungstag und Bekanntmachung des Hinweises auf die Patenterteilung: **28.09.2005**
(21) Anmeldenummer: 95118436.5
(22) Anmeldetag: 23.11.1995
(51) Int. Cl.: H04Q 11/04, H04L 12/56

(54) **Verfahren zur Erzeugung eines Zufallselements sowie Verfahren zur Verkehrsmischung, Zufallselement-Generator und Systemkomponente damit**
Method of generating a random element as well as a method of mixing traffic, a random element generator and system components therefor
Procédé pour la production d'un élément aléatoire ainsi que le procédé de mélange de trafic, générateun d'éléments aléatoire et ses composants de système

(30) Priorität: 30.11.1994 DE 4442532
(43) Veröffentlichungstag der Anmeldung: 05.06.1996
(73) Patentinhaber: ALCATEL, 75008 Paris (FR)
(72) Erfinder: Wahl, Stefan, D-71701 Schwieberdingen (DE)
(74) Vertreter: Brose, Gerhard

(56) Entgegenhaltungen:
- EP-A- 0 509 126
- EP-A- 0 609 570
- DE-A- 4 010 305
- DE-A- 4 213 988
- PROCEEDINGS OF THE ANNUAL SYMPOSIUM ON FOUNDATIONS OF COMPUTER SCIENCE, SAN JUAN, PUERTO RICO, OCT. 1 - 4, 1991, Nr. SYMP. 32, 1.Oktober 1991, INSTITUTE OF ELECTRICAL AND ELECTRONICS ENGINEERS, Seiten 79-89, XP000326079 ZUCKERMAN D: "SIMULATING BPP USING A GENERAL WEAK RANDOM SOURCE"
- COMMUNICATIONS - RISING TO THE HEIGHTS, DENVER, JUNE 23 - 26, 1991, Bd. 1 OF 3, 23.Juni 1991, INSTITUTE OF ELECTRICAL AND ELECTRONICS ENGINEERS, Seiten 408-412, XP000269434 YOUNG MAN KIM ET AL: "PR-BANYAN: A PACKET SWITCH WITH A PSEUDO RANDOMIZER FOR NONUNIFORM TRAFFIC"

## Beschreibung

Die Erfindung betrifft ein Verfahren zur Erzeugung eines Zufallselements nach dem Oberbegriff von Anspruch 1, ein Verfahren zur Verkehrsmischung nach dem Oberbegriff von Anspruch 5, einen Zufallselement-Generator nach dem Oberbegriff von Anspruch 8 und eine Systemkomponente für ein Telekommunikationssystem nach dem Oberbegriff von Anspruch 9.

Ein großer Einsatzbereich für Zufallselement-Generatoren sind Verkehrsmischer. In diesen werden sie benötigt, um den Verkehr zufällig zu vermischen und so eine gute statistische Verkehrsmischung zu erreichen.

Die Erfindung geht nun von solchen Verkehrsmischern und beispielhaft von den in diesen verwendeten Zufallselement-Generator aus.

In der Europäischen Patentanmeldung mit der Veröffentlichungsnummer 609570 ist ein solcher Verkehrsmischer beschrieben. Dieser verwürfelt die Reihenfolge der Zeitschlitze eines synchronen Daten-Stromes, der an einem ATM-Koppelnetz (ATM = Asynchronous Transfer Mode) ankommt. Hierzu schreibt er die in den Zeitschlitzen enthaltenen Datenpakete zyklisch in einen Zwischenspeicher ein und liest sie sodann gemäß zufällig erzeugter Permutationen wieder aus dem Zwischenspeicher aus. Die Permutationen werden hierbei von einem Pseudo-Zufallsgenerator erzeugt, der von einem rückgekoppelten Schieberegister gebildet wird.

Die Verwendung eines rückgekoppelten Schieberegisters als Pseudo-Zufallsgenerator fordert einen zusätzlichen Bauelementeaufwand zur Realisierung des Schieberegisters.

Der Erfindung liegt nun die Aufgabe zugrunde, ein Zufallselement mit geringem Aufwand bereitzustellen.

Die Aufgabe wird gelöst durch zwei Verfahren nach der Lehre von Anspruch 1 und Anspruch 5, durch einen Zufallselement-Generator nach der Lehre von Anspruch 8 und durch eine Systemkomponente für ein Telekommunikationssystem nach der Lehre von Anspruch 9.

Die Grundidee der Erfindung ist, daß bereits im Betrieb einer Einrichtung auftretende, nicht deterministische Ereignisse erfaßt werden und aus diesen durch eine Abbildungsvorschrift ein Zufallselement erzeugt wird. Es wird so nicht eigens für die Erzeugung eines Zufallselements ein Zufallsgenerator aufgebaut, sondern es wird hierfür ein bereits vorhandener, statistischer Vorgang ausgenutzt.

Als Zufallselement wird hierbei jegliche Einwirkung auf einen Prozess durch den Zufall angesehen. So sind beispielsweise Zufallszahlen oder ein Signal, in dem der zeitliche Abstand zwischen Signalimpulsen zufällig ist, Zufallselemente.

Die Erfindung hat den Vorteil, daß der Bauelementeaufwand für die Realisierung reduziert wird. Ein weiterer Vorteil ist, daß die Zeit für die Bereitstellung eines Zufallselements durch die Erfindung verkürzt wird.

Vorteilhaft ist hierbei die Verwendung dieser Grundidee bei der Verkehrsmischung, da dort besonders hohe Geschwindigkeitsanforderungen bestehen und so möglichst einfach zu realisierende Hardware-Implementierungen gefordert sind.

Vorteilhafte Ausgestaltungen der Erfindung sind den Unteransprüchen zu entnehmen.

Eine Implementierung der Erfindung, die zur Verkehrsmischung die Reihenfolge von Datenpaketen durch Einschreiben und Auslesen aus einem Zwischenspeicher verwürfelt, hat hierbei den zusätzlichen Vorteil, daß dadurch eine sehr gute Verkehrsmischung gewährleistet wird, die ansonsten nur durch aufwendige Permutationsbildung erreicht wird.

Im folgenden wird die Erfindung anhand zweier Ausführungsbeispiele unter Zuhilfenahme beiliegender Zeichnungen weiter erläutert.
- Fig. 1: zeigt ein Blockschaltbild eines erfindungsgemäßen Koppelelements.
- Fig. 2: zeigt ein Zeitdiagramm interner Zustände des erfindungsgemäßen Koppelelements nach Fig. 1.

Im ersten Ausführungsbeispiel wird die Durchführung des erfindungsgemäßen Verfahrens zur Verkehrsmischung in einem erfindungsgemäßen Koppelelement beschrieben, das Teil eines erfindungsgemäßen Koppelnetzes ist und mit einem erfindungsgemäßen Zufallselement-Generator ausgestattet ist. Hierbei wird gleichzeitig die Durchführung des erfindungsgemäßen Verfahrens zur Erzeugung eines Zufallselements erläutert.

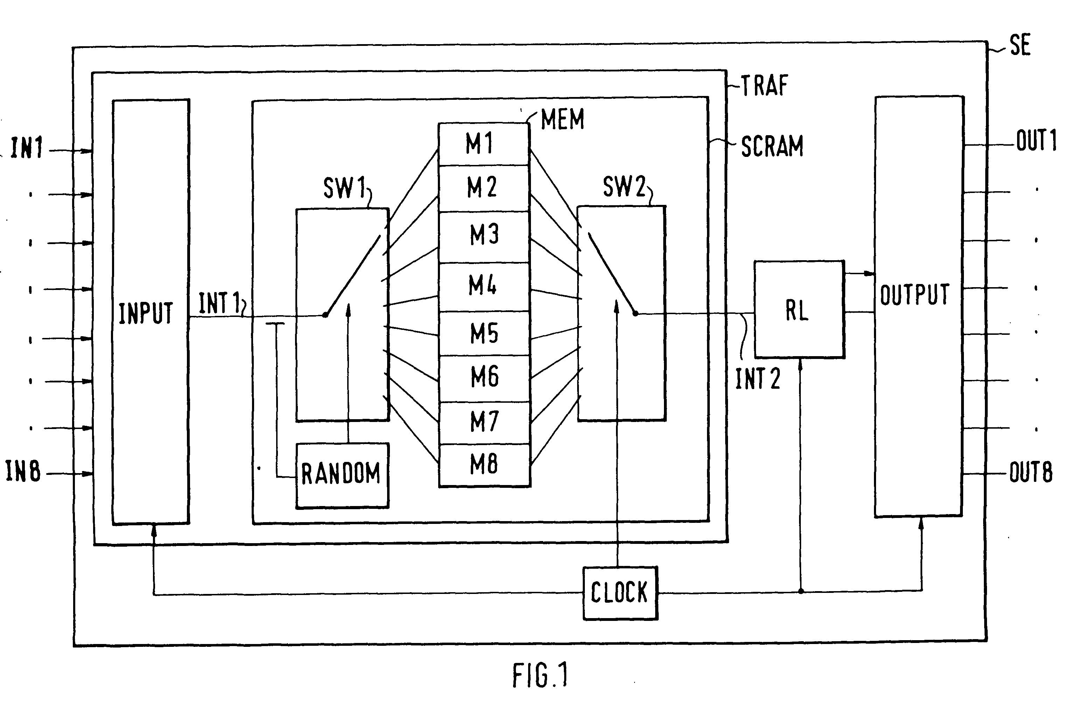

Die Fig. 1 zeigt ein Koppelelement SE mit acht Eingangsleitungen IN1 bis IN8 und acht Ausgangsleitungen OUT1 bis OUT8.

Das Koppelelement SE ist Teil eines Koppelnetzes, das der Vermittlung von ATM-Datenpaketen dient.

Die Vermittlung von ATM-Datenpaketen durch das Koppelelement SE ist hier nur beispielhaft gewählt, da sich durch den zufälligen Ankunftsabstand zwischen zwei ATM-Datenpaketen eine Vielzahl nicht deterministischer Ereignisse ergibt und die Verkehrsmischung eine wichtige Aufgabe in einem ATM-Koppelnetz ist. Dieselben Vorteile würden sich ergeben, wenn mit dem Koppelnetz SE Datenpakete unterschiedlicher Länge vermittelt werden. Das Koppelelement könnte auch in einer synchronen oder teilweise synchronen Umgebung arbeiten, in der es beispielsweise synchrone Datenströme über die Eingangsleitungen IN1 bis IN8 empfängt.

Neben dem Koppelelement SE enthält das Koppelnetz noch eine Vielzahl von weiteren Koppelelementen. Die Koppelelemente des Koppelnetzes sind in einer mehrstufigen Koppelnetzanordnung angeordnet, wobei eine der Koppelnetzstufen als Verteilstufe arbeitet. Die Koppelelemente dieser Verteilstufe sind wie das Koppelelement SE aufgebaut.

Die Struktur eines solchen Koppelnetzes kann beispielhaft dem Artikel "Das ATM-Koppelfeld von Alcatel und seine Eigenschaften", Elektrisches Nachrichtenwesen, Band 64, Nr. 2/3, 1990 von D. Böttle und M.A. Henrion entnommen werden.

Es ist auch möglich, daß nur ein einzelnes oder aber sämtliche Koppelelemente des Koppelnetzes wie das Koppelelement SE ausgestaltet sind.

Über die Eingangsleitungen IN1 bis IN8 kommen ATM-Datenpakete an dem Koppelelement SE an. Die ATM-Datenpakete haben alle dieselbe Länge und kommen mit zufälligem Ankunftsabstand an dem Koppelelement SE an. Das Koppelelement SE leitet diese ATM-Datenpakete auf Grund von Zielinformationen, die im Kopf eines jeden ankommenden ATM-Datenpaketes vermerkt sind, an eine der Ausgangsleitungen OUT1 bis OUT8 des Koppelelements SE weiter und sendet sie sodann über diese aus.

Das Koppelelement SE weist einen Verkehrsmischer TRAF, eine Wegesucheinrichtung RL, eine Ausgangseinrichtung OUTPUT und einen Taktgeber CLOCK auf.

Der Verkehrsmischer TRAF empfängt über die Eingangsleitungen IN1 bis IN8 Datenpakete und sendet über eine Leitung INT2 Datenpakete an die Wegesucheinrichtung RL. Die Ausgangseinrichtung OUTPUT empfängt von der Wegesucheinrichtung RL Datenpakete und Wegesuchdaten und sendet Datenpakete über die Ausgangsleitung OUT1 bis OUT8 aus. Der Taktgeber CLOCK sendet Taktsignale an den Verkehrsmischer TRAF, die Wegesucheinrichtung RL und die Ausgangseinrichtung OUTPUT.

Der Taktgeber CLOCK stellt Taktsignale für den Verkehrsmischer TRAF, die Wegesucheinrichtung RL und die Ausgangseinrichtung OUTPUT zur Verfügung. Die Taktrate dieser Taktsignale entspricht hierbei der achtfachen Taktrate derjenigen Taktrate, die durch den minimalen Ankunftsabstand zweier aufeinanderfolgender ATM-Datenpaketen auf einer der Eingangsleitungen IN1 bis IN8 bestimmt ist. Die Taktrate wird so von der Länge eines ATM-Datenpaketes und von der Bitrate auf den Verbindungswegen zwischen den Koppelelementen bestimmt. Die Taktsignale werden im Taktgeber CLOCK beispielsweise mittels eines Schwingkreises mit einem Schwing-Quarz erzeugt.

Es ist auch möglich, daß die Taktsignale von einem Taktgeber erzeugt werden, der außerhalb des Koppelelements SE untergebracht ist. Weiter ist es möglich, daß der Verkehrsmischer TRAF, die Wegesucheinrichtung RL oder die Ausgangseinrichtung OUTPUT mit einem eigenen Taktgeber ausgestattet sind.

Der Verkehrsmischer TRAF mischt die über die Eingangsleitungen IN1 bis IN8 ankommenden Verkehrsströme zufällig und konzentriert sie auf die Leitung INT2, die damit die achtfache Datenrate der Eingangsleitungen IN1 bis IN8 hat. Dadurch erreicht der Verkehrsmischer TRAF, daß auf der Leitung INT2 nicht mehr nachvollziehbar ist, von welcher der Eingangsleitungen IN1 bis IN8 ein ATM-Datenpaket stammt. Die Ausgangsleitungen OUT1 bis OUT8 und die Eingangsleitungen IN1 bis IN8 sind so nicht mehr zeitlich fest gekoppelt.

Die Wegesucheinrichtung RL analysiert die Wegesuchdaten im Wege-Adressfeld jedes ATM-Datenpaketes. Abhängig von diesen Wegesuchdaten und dem in der Wegesucheinrichtung RL implementierten Wegesuchverfahren weist sie sodann dem ATM-Datenpaket eine der Ausgangsleitungen OUT1 bis OUT8 zu. Anschließend leitet sie das ATM-Datenpaket und die zugehörigen Wege-Daten, die angeben, auf welcher Ausgangsleitung das ATM-Datenpaket auszusenden ist, an die Ausgangseinrichtung OUTPUT weiter.

Es ist auch möglich, daß von der Wegesucheinrichtung RL nicht eine einzelne Ausgangsleitung sondern eine ganze Gruppe von Ausgangsleitungen als eine Gruppe solcher Ausgangsleitungen bestimmt wird, über die das ATM-Datenpaket auszusenden ist.

Die Ausgangseinrichtung OUTPUT sendet von der Wegesucheinrichtung RL empfangene ATM-Datenpakete auf den durch die zugehörigen Wege-Daten bestimmten Ausgangsleitungen der Ausgangsleitungen OUT1 bis OUT8 aus. Die Datenrate auf den Ausgangsleitungen OUT1 bis OUT8 entspricht hierbei der Datenrate auf den Eingangsleitungen IN1 bis IN8 und ist so acht mal geringer als die Datenrate, mit der die ATM-Datenpakete von der Wegesucheinrichtung RL ankommen. Die Ausgangseinrichtung OUTPUT verfügt daher über entsprechende Zwischenspeicher, mittels derer die Anpassung der unterschiedlichen Datenraten bewerkstelligt wird.

Die zum selben Zeitpunkt über die Eingangsleitungen IN1 bis IN8 ankommenden ATM-Datenpakete werden im Verkehrsmischer TRAF in zufälliger Reihenfolge auf die Leitung INT2 konzentriert. Anschließend wird in der Wegesucheinrichtung RL zu jedem ATM-Datenpaket diejenige der Ausgangsleitungen OUT1 bis OUT8 bestimmt, über die es ausgesendet werden soll und sodann in der Ausgangseinrichtung OUTPUT auf dieser Ausgangsleitung ausgesendet.

Der Verkehrsmischer TRAF weist eine Eingangseinrichtung INPUT und einen Verwürfler SCRAM auf. Die Eingangseinrichtung INPUT empfängt ATM-Datenpakete über die Eingangsleitungen IN1 bis IN8 und sendet ATM-Datenpakete über eine Leitung INT1 an den Verwürfler SCRAM, der ATM-Datenpakete über die Leitung INT2 an die Wegesucheinrichtung RL sendet.

Die Eingangseinrichtung INPUT multiplext die ATM-Datenpakete von den Eingangsleitungen IN1 bis IN8 auf die Leitung INT1. Die Datenrate auf der Leitung INT1 ist so achtfach höher wie die auf den Eingangsleitungen IN1 bis IN8. Die Eingangseinrichtung INPUT tastet hierzu zyklisch die Eingangsleitungen IN1 bis IN8 ab und leitet ein eventuell vorliegendes Datenpaket über die Leitung INT1 weiter. Das Taktsignal von dem Taktgeber CLOCK bestimmt hierbei jeweils den Wechsel zur nächsten Eingangsleitung.

Der Verwürfler SCRAM verwürfelt die Reihenfolge der über die Leitung INT1 ankommenden Datenpakete. Hierdurch erscheint es auf der Leitung INT2, als ob die Eingangsleitungen IN1 bis IN8 bereits von der Eingangseinrichtung INPUT in einer zufälligen Reihenfolge für den Multiplexvorgang ausgewählt worden wären.

Der Verwürfler SCRAM weist zwei Schalteinrichtungen SW1 und SW2, eine Speichereinrichtung MEM mit acht Speicherplätzen M1 bis M8 und einen Zufallselement-Generator RANDOM auf.

Die Schalteinrichtung SW1 empfängt ATM-Datenpakete über die Leitung INT1 und tauscht mit den Speicherplätzen M1 bis M8 der Speichereinrichtung MEM Daten aus. Die Schalteinrichtung SW2 tauscht mit den Speicherplätzen M1 bis M8 der Speichereinrichtung MEM Daten aus und sendet ATM-Datenpakete über die Leitung INT2. Der Zufallselement-Generator RANDOM greift Daten von der Leitung INT1 ab und sendet Steuerdaten an die Schalteinrichtung SW1. Die Schalteinrichtung SW2 empfängt Taktsignale von dem Taktgeber CLOCK.

Die Schalteinrichtung SW1 liest die über die Leitung INT1 empfangenen ATM-Datenpakete jeweils in eine der Speicherplätze M1 bis M8 ein. Derjenige Speicherplatz der Speicherplätze M1 bis M8, in den ein ATM-Datenpaket eingelesen wird, wird von der Schalteinrichtung SW1 wie folgt bestimmt:

Die Schalteinrichtung SW1 bestimmt nach einem vorgegebenen, deterministischen Einschreibezyklus jeweils aus den Speicherplätzen M1 bis M8 zu einem aktuellen Speicherplatz den nächstfolgenden Speicherplatz. Der Wechsel zum nächstfolgenden Speicherplatz wird jeweils durch Steuerdaten von dem Zufallselement-Generator RANDOM ausgelöst. Ist ein solcher Wechsel zum nächstfolgenden Speicherplatz erfolgt, so liest die Schalteinrichtung SW1 Daten aus diesem Speicherplatz aus und überprüft anhand dieser Daten, ob dieser Speicherplatz mit einem ATM-Datenpaket belegt ist. Trifft dies zu, so wechselt die Schalteinrichtung SW1 solange gemäß dem Einlesezyklus zum jeweiligen nächstfolgenden Speicherplatz, bis ein freier Speicherplatz gefunden ist. Anschließend wird das ATM-Datenpaket in diesen Speicherplatz eingeschrieben.

Es ist auch möglich, eine zusätzliche Liste vorzusehen, in der vermerkt wird, ob einer der Speicherplätze M1 bis M8 belegt ist oder nicht. Mittels dieser Liste würde dann überprüft, ob ein Speicherplatz mit einem ATM-Datenpaket belegt ist oder nicht.

Der Zufalls-Generator RANDOM greift Daten von der Leitung INT1 ab und erzeugt daraus ein Zufallselement, das einen zufälligen Wechsel zum nächstfolgenden Speicherplatz in der Schalteinrichtung SW1 bewirkt.

Der Zufallselement-Generator erfaßt hierzu jeweils die Ankunft eines ATM-Datenpakets. Da der Ankunftsabstand zwischen zwei aufeinanderfolgenden ATM-Datenpaketen auf jedem der Eingangsleitungen IN1 bis IN8 zufällig ist, ist auch der Ankunftsabstand zwischen zwei aufeinanderfolgenden ATM-Datenpakete auf der Leitung INT1 zufällig. Damit ist die von dem Zufallselement-Generator RANDOM erfaßte Ankunft eines ATM-Datenpaketes ebenfalls ein zufälliges Ereignis, das einer bestimmten Zufallsverteilung entspricht. Dieses Zufalls-Ereignis wird nun von dem Zufallselement-Generator RANDOM mittels einer vorgegebenen Zuordnungsvorschrift auf die Steuerdaten abgebildet, die sodann dem Wechsel zum nächsten Speicherplatz in der Schalteinrichtung SW1 bewirken.

Im einfachsten Fall besteht diese Abbildungsvorschrift darin, jedesmal bei Auftreten dieses Ereignisses einen Wechsel zum nächsten Speicherplatz zu veranlassen. Es ist jedoch auch möglich komplexere Zuordnungsvorschriften zu verwenden. So ist es beispielsweise möglich, bei Eintreffen des Zufallsereignisses zwei oder mehrere Wechsel hintereinander zu veranlassen. Es ist auch möglich, die Anzahl der aufeinanderfolgenden Wechsel bei Zutreffen jedes Ereignisses zyklisch zu verändern. Beispielsweise ein, drei, zwei, ein, ... Wechsel jeweils bei Eintreffen des Zufalls-Ereignisses.

Es ist auch möglich, daß von dem Zufallselement-Generator ein oder mehrere Bits im Datenfeld eines ankommenden ATM-Datenpakets erfaßt werden, wobei jeweils das Auftreten einer bestimmten binären Zahlenkombination als Zufalls-Ereignis gewertet wird. Eine Zuordnungsvorschrift hierfür könnte beispielsweise darin bestehen, bei Auftreten bestimmter Zufalls-Ereignisse jeweils eine bestimmte Zahl von ATM-Datenpakete nacheinander in Speicherplätze einzulesen. Hierfür wäre ein zusätzlicher Zwischenspeicher für ATM-Datenpakete in der Schalteinrichtung SW1 notwendig.

Noch eine weitere Möglichkeit, nicht deterministische Ereignisse mit dem Zufallselement-Generator RANDOM zu erfassen, ist beispielsweise, Daten über den Füllstand interner Speicher des Koppelelements SE zu erfassen, beispielsweise von Empfangs- oder Sende-Puffern. Hierbei ist es vorteilhaft, daß Zufalls-Ereignisse durch kleinere Schwankungen des Füllstands ausgelöst werden.

Es ist auch möglich, mehrere verschiedenartige Ereignisse parallel zu erfassen.

Die Speichereinrichtung MEM wird von einem Schreib-Lese-Speicher mit acht Speicherplätzen gebildet, in denen jeweils die Datenmenge eines ATM-Datenpaketes abgespeichert werden kann. Die Speichereinrichtung MEM kann hierbei entweder von einem einzelnen Speicherchip gebildet werden oder Teil einer größeren Speichereinrichtung mit dynamischer Speicherplatzzuteilung sein.

Die Schalteinrichtung SW2 liest aus einem Speicherplatz der Speicherplätze M1 bis M8, der für sie den aktuellen Speicherplatz darstellt, ein ATM-Datenpaket aus und löscht anschließend das ATM-Datenpaket aus diesem Speicherplatz. Aufgrund des Taktsignals von dem Taktgeber CLOCK führt die Schalteinrichtung SW2 einen Wechsel von einem aktuellen Speicherplatz zum nächstfolgenden aktuellen Speicherplatz durch. Ist in einem Speicherplatz kein ATM-Datenpaket abgelegt, so wird auch kein solches über die Leitung INT2 gesendet. Die Wahl des nächstfolgenden Speicherplatzes wird von einem vorgegebenen Auslesezyklus bestimmt. Es ist hierbei vorteilhaft, daß sich der Auslesezyklus von dem Einschreibezyklus unterscheidet. Wenn der Einschreibe- und Auslesezyklus gleich gewählt wird, so wird durch den Verwürfler nicht mehr die Reihenfolge der ATM-Datenpakete verwürfelt, sondern ihr zeitlicher Abstand wird zufällig verändert. Eine Zuordnung von ATM-Datenpaketen auf der Leitung INT2 zu den Eingangsleitungen IN1 bis IN8 ist so jedoch ebenfalls nicht mehr möglich.

Es ist auch möglich, daß anstelle von ATM-Datenpaketen ATM-Daten-Zellen und anstelle von keinem Signal auf der Leitung ATM-Leer-Zellen auf den Eingangsleitungen IN1 bis IN8, den Ausgangsleitungen OUT1 bis OUT8 und den Leitungen INT1 und INT2 liegen. In diesem Fall würden analog zu oben ATM-Daten-Zellen in den Zwischenspeicher MEM eingelesen, beim Auslesen stände jedoch ein Leer-Zellen-Generator zur Verfügung, der eine Leer-Zelle auf der Leitung INT2 einfügt, wenn keine ATM-Datenzelle ausgelesen wird.

Weiter ist es möglich nicht die ATM-Datenpakete in den Speicherplätzen M1 bis M8 zu speichern, sondern Zeiger, die auf solche ATM-Datenpakete verweisen oder jeweils nur den Kopf dieser ATM-Datenpakete.

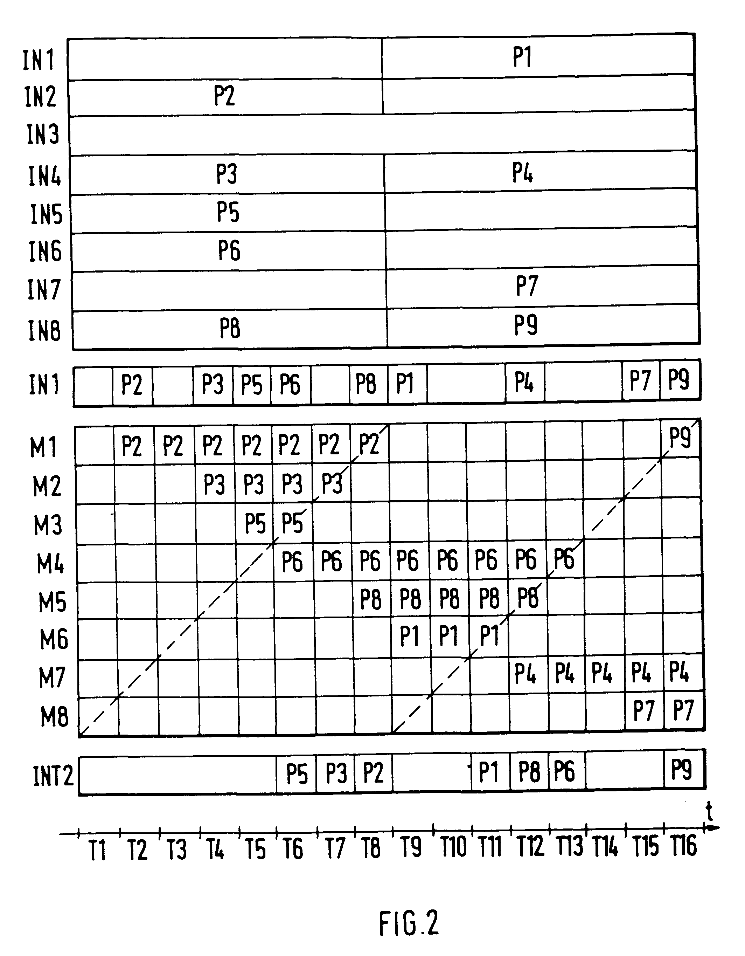

Im folgenden wird nun der Verkehrsfluß durch das Koppelelement SI anhand von Fig. 2 beispielhaft erläutert.

Fig. 2 zeigt die zeitliche Lage der neun ATM-Datenpakete P1 bis P9 über einen Zeitraum von 16 Zeiteinheiten T1 bis T16. Im Einzelnen zeigt Fig. 2 die zeitliche Lage der ATM-Datenpakete P1 bis P9 bei ihrer Ankunft an dem Koppelelement SE über eine der Eingangsleitungen IN1 bis IN8 sowie deren zeitliche Lage auf den Leitung INT1 und INT2. Weiter zeigt Fig. 2, zu welcher Zeit und in welchen der Speicherplätze M1 bis M8 die ATM-Datenpakete P1 bis P9 abgespeichert sind.

Die Zeiteinheiten T1 bis T16 sind jeweils von gleicher Dauer. Hierbei entspricht ihre Dauer der zeitlichen Dauer, die für das Aussenden eines ATM-Datenpakets auf einer der internen Leitungen INT1 oder INT2 notwendig ist oder einem achtel der Dauer, die für die Aussendung eines ATM-Datenpakets auf den Eingangsleitungen IN1 bis IN8 oder den Ausgangsleitungen OUT1 bis OUT8 notwendig ist.

Während der Zeiteinheiten T1 bis T8 kommen über die Eingangsleitungen IN2, IN4, IN5, IN6 und IN8 die ATM-Datenpakete P2, P3, P5, P6 bzw. P8 an. Während der Zeiteinheiten T9 bis T16 kommen über die Eingangsleitungen IN1, IN4, IN7 und IN8 die ATM-Datenpakete P1, P4, P7 bzw. P9 an. Die Eingangseinrichtung INPUT leitet nun diese ATM-Datenpakete zyklisch auf die Leitung INT1 weiter, wobei die Reihenfolge, in der die Eingangsleitungen IN1 bis IN8 abgearbeitet werden, ihrer Nummerierung entspricht. So werden von der Eingangseinrichtung INPUT zu den Zeiteinheiten T2, T4, T5, T6, T8, T9, T12, T15 und T16 die ATM-Datenpakete P2, P3, P5, P6, P8, P1, P4, P7 bzw. P9 auf der Leitung INT1 ausgesendet.

Die über die Leitung INT1 an der Schalteinrichtung SW1 ankommenden ATM-Datenpakete werden von dieser entsprechend dem oben beschriebenen Algorythmus in die Speicherplätze M1 bis M8 der Speichereinrichtung MEM eingeschrieben. So ist im Speicherplatz M1 während der Zeiteinheiten T2 bis T8 das ATM-Datenpaket P2 und während der Zeiteinheit T16 das ATM-Datenpaket P9, in dem Speicherplatz M2 während der Zeiteinheiten T4 bis T7 das ATM-Datenpaket P3 und im Speicherplatz M3 während der Zeiteinheiten T5 und T6 das ATM-Datenpaket P5 abgespeichert. Im Speicherplatz M4 ist während der Zeiteinheiten T6 bis T13 das ATM-Datenpaket P6, in dem Speicherplatz M5 während der Zeiteinheiten T8 bis T12 das ATM-Datenpaket P8 und im Speicherplatz M6 während der Zeiteinheiten T9 bis T11 das ATM-Datenpaket P1 abgespeichert. Im Speicherplatz M7 ist ab der Zeiteinheit T12 das ATM-Datenpaket P4 und im Speicherplatz M8 ab der Zeiteinheit T15 das ATM-Datenpaket P7 abgespeichert.

Die Schalteinrichtung SW2 liest zyklisch ATM-Datenpakete aus der Speichereinrichtung MEM aus, wobei die Speicherplätze M1 bis M8 in der entgegengesetzten Reihenfolge ihrer Nummerierung abgearbeitet werden, was in Fig. 2 durch zwei gestrichelte Linien gezeigt ist. Der Auslesezyklus ist hier sehr einfach gewählt, könnte aber auch komplizierter sein. Damit sendet die Schalteinrichtung SW2 während der Zeiteinheiten T6, T7, T8, T11, T12, T13 und T16 die ATM-Datenpakete P5, P3, P2, P1, P8, P6 bzw. P9 auf der Leitung INT2 aus. Die Verkehrsströme von den Eingangsleitungen IN1 bis IN8 sind so zufällig gemischt. Beispielsweise erscheint es hier so, als wären die ATM-Datenpakete P5, P3, P2, P1, P8, P6 und P9 auf den Eingangsleitungen IN6, IN7, IN8, IN3, IN4, IN5 bzw. IN8 angekommen.

Es ist auch möglich, die Verkehrsmischung in dem Koppelelement ausgangsseitig und nicht wie nach Fig. 1 eingangsseitig durchzuführen. Hierzu müßte der Verwürfler SCRAM zwischen der Wegesucheinrichtung RL und der Ausgangseinrichtung OUTPUT geschaltet werden.

Weiter ist es möglich, das Koppelelement als reinen Verkehrsmischer zu betreiben, indem auf die Wegesucheinrichtung RL verzichtet wird. Auch der Einsatz des Verkehrsmischers TRAF an einer beliebigen anderen Stelle des Koppelnetzes ist möglich.

In einem zweiten Ausführungsbeispiel wird nun die Durchführung des erfindungsgemäßen Verfahrens zur Erzeugung eines Zufallselements in einem Koppelnetz erläutert, das mit einem erfindungsgemäßen Zufallselement-Generator ausgestattet ist.

Das Koppelnetz ist mit einer Einrichtung zur Erzeugung einer Zufallszahl versehen, die einen Zufallselementen-Generator enthält.

Der Zufallselement-Generator ist wie der Zufallselement-Generator nach Fig. 1 ausgestaltet. Er erfaßt ein sowieso auftretendes, nicht deterministisches Ereignis, beispielsweise die Ankunft eines ATM-Datenpaketes, und bildet es mittels einer Abbildungsvorschrift auf die Zufallszahl ab.

Hierzu zählt er die Anzahl der Ereignisse, die er innerhalb einer Taktperiode erfaßt und gibt diese Zahl als Zufallszahl weiter.

Es ist auch möglich, daß er diese Zahl durch einen Algorithmus, beispielsweise dem Abschneiden vorderer Stellen, noch zusätzlich umbildet. Es ist weiter möglich, daß diese Ereignisse als Stoppsignale für einen Zähler wirken, dessen Zählerwert als Zufallszahl verwendet wird.

Weitere Möglichkeiten würden sich eröffnen, wenn es sich bei den erfaßten Ereignissen um verschiedenartige Ereignisse handeln würde. Solche verschiedenartige Ereignisse würden beispielsweise von unterschiedlichen Bitkombinationen im Datenfeld eines ankommenden Datenpaketes bestimmt. In diesem Falle ist es möglich, daß jedes der verschiedenartigen Ereignisse auf einen bestimmten Zahlenwert abgebildet wird, der dann jeweils als Zufallszahl weitergegeben wird. Auch hier ist es durch komplexere Abbildungsvorschriften möglich, Zufallszahlen in einem beliebig wählbaren Zahlenbereich zu erhalten.

Es ist möglich, daß auch eine beliebige andere Systemkomponente eines Telekommunikationssystems mit solch einem Zufallselement-Generator ausgestattet ist.

## Patentansprüche

1. Verfahren zur Erzeugung eines Zufallselementes in einer Einrichtung (SE), **dadurch gekennzeichnet , daß** bereits im Betrieb der Einrichtung auftretende, nicht deterministische Ereignisse erfaßt und mittels einer Zuordnungsvorschrift auf das Zufallselement abgebildet werden, wobei die Einrichtung (SE) Funktionen für ein ATM-Kommunikationsnetz ausführt unter anderem Verkehrsmischung von Datenpaketen in einem Koppelnetz.

2. Verfahren nach Anspruch 1, **dadurch gekennzeichnet, daß** durch die Ankunft von Datenpaketen (P1 bis P9) bestimmte Ereignisse erfaßt werden.

3. Verfahren nach Anspruch 1, **dadurch gekennzeichnet, daß** durch den Inhalt von Datenpaketen (P1 bis P9) bestimmte Ereignisse erfaßt werden.

4. Verfahren nach Anspruch 1, **dadurch gekennzeichnet, daß** durch den Füllstand interner Speicher bestimmte Ereignisse erfaßt werden.

5. Verfahren zur Verkehrsmischung in einem Koppelnetz für Datenpakete, **dadurch gekennzeichnet, daß** bereits im Betrieb des Koppelnetzes auftretende, nicht deterministische Ereignisse erfaßt werden und mittels der erfaßten Ereignisse Datenpakete (P1 bis P9) zufällig verwürfelt werden.

6. Verfahren nach Anspruch 5, **dadurch gekennzeichnet, daß** das Koppelnetz von einem ATM-Koppelnetz gebildet wird und daß für das Verwürfeln Datenpakete (P1 bis P9) zyklisch in einen Zwischenspeicher (MEM) eingeschrieben und ausgelesen werden, wobei die Datenpakete (P1 bis P9) beim Auslesen aus dem Zwischenspeicher gelöscht werden und das Einschreiben und das Auslesen von den Ereignissen bzw. deterministisch gesteuert wird.

7. Verfahren nach Anspruch 6, **dadurch gekennzeichnet, daß** als Ereignisse die Ankunft von Datenpaketen (P1 bis P9) erfaßt wird und daß der Einschreibezyklus durch die erfaßten Ereignisse und der Auslesezyklus mit einem konstanten Takt (CLOCK) weitergetaktet wird.

8. Zufallselement-Generator (RANDOM) für eine Einrichtung (SE), **dadurch gekennzeichnet, daß** der Zufallselement-Generator (RANDOM) mit einer Abbildungseinrichtung zum Erfassen von bereits im Betrieb der Einrichtung (SE) auftretenden, nicht deterministischen Ereignissen versehen ist und daß die Abbildungseinrichtung so ausgestaltet ist, daß sie aus den Ereignissen mittels einer Zuordnungsvorschrift ein Zufallselement erzeugt.

9. Systemkomponente (SE) für ein Telekommunikationssystem mit einem Zufallselement-Generator (RANDOM), **dadurch gekennzeichnet, daß** der Zufallselement-Generator (RANDOM) mit einer Abbildungseinrichtung zum Erfassen von bereits im Betrieb der Systemkomponente (SE) auftretenden, nicht deterministischen Ereignissen versehen ist und daß die Abbildungseinrichtung so ausgestaltet ist, daß sie aus den Ereignissen mittels einer Zuordnungsvorschrift ein Zufallselement erzeugt.

10. Systemkomponente nach Anspruch 9, **dadurch gekennzeichnet, daß** die Systemkomponente ein Koppelnetz ist.

11. Systemkomponente (SE) nach Anspruch 9, **dadurch gekennzeichnet, daß** die Systemkomponente ein Koppelelement ist.

## Claims

1. Method for creating a random element in a facility (SE), **characterized in that** nondeterministic events already occurring in the operation of the facility are recorded and mapped on to the random element using an assignment algorithm, the facility (SE) executing functions for an ATM communications network including traffic mixing of data packets in a switching network.

2. Method according to Claim 1, **characterized in that** certain events are recorded as a result of the arrival of data packets (P1 to P9).

3. Method according to Claim 1, **characterized in that** certain events are recorded as a result of the contents of data packets (P1 to P9).

4. Method according to Claim 1, **characterized in that** certain events are recorded as a result of the fill level of internal storage.

5. Method for traffic mixing in a switching network for data packets, **characterized in that** nondeterministic events already occurring in the operation of the switching network are recorded and data packets (P1 to P9) are randomly scrambled using the recorded events.

6. Method according to Claim 5, **characterized in that** the switching network is formed by an ATM switching network and that for the scrambling, data packets (P1 to P9) are cyclically written into an intermediate memory (MEM) and read out, the data packets (P1 to P9) being deleted from the intermediate memory upon reading, and the writing and reading being controlled by the events or deterministically.

7. Method according to Claim 6, **characterized in that** the arrival of data packets (P1 to P9) is recorded as events and that the write cycle is further supplied with clock pulses as a result of the recorded events, and the read cycle with a constant clock (CLOCK).

8. Random element generator (RANDOM) for a facility (SE), **characterized in that** the random element generator (RANDOM) is provided with a mapping facility for recording nondeterministic events already occurring in the operation of the facility (SE) and that the mapping facility is designed such that it generates a random element from the events using an assignment algorithm.

9. System component (SE) for a telecommunication system with a random element generator (RANDOM), **characterized in that** the random element generator (RANDOM) is provided with a mapping facility for recording nondeterministic events already occurring in the operation of the system component (SE) and that the mapping facility is designed such that it generates a random element from the events using an assignment algorithm.

10. System component according to Claim 9, **characterized in that** the system component is a switching network.

11. System component (SE) according to Claim 9, **characterized in that** the system component is a switching element.

## Revendications

1. Procédé de génération d'un élément aléatoire dans un dispositif (SE), **caractérisé en ce que** les événements non déterministes qui se produisent déjà pendant le fonctionnement de l'équipement sont détectés et sont représentés sur l'élément aléatoire au moyen d'une instruction de représentation, le dispositif (SE) exécutant des fonctions pour un réseau de communication ATM, notamment le mélange de trafic de paquets de données dans un réseau de connexion.

2. Procédé selon la revendication 1, **caractérisé en ce que** certains événements sont détectés par l'arrivée de paquets de données (P1 à P9).

3. Procédé selon la revendication 1, **caractérisé en ce que** certains événements sont détectés par le contenu de paquets de données (P1 à P9).

4. Procédé selon la revendication 1, **caractérisé en ce que** certains événements sont détectés par le niveau de remplissage d'une mémoire interne.

5. Procédé de mélange de trafic dans un réseau de connexion pour paquets de données, **caractérisé en ce que** les événements non déterministes qui se produisent déjà pendant le fonctionnement de l'équipement sont détectés et des paquets de données (P1 à P9) sont brouillés de manière aléatoire au moyen des événements détectés.

6. Procédé selon la revendication 5, **caractérisé en ce que** le réseau de connexion est formé par un réseau de connexion ATM et que pour le brouillage, les paquets de données (P1 à P9) sont écrits de manière cyclique dans une mémoire temporaire (MEM) et en sont chargés, les paquets de données (P1 à P9) étant effacés de la mémoire temporaire lors du chargement et l'écriture ainsi que le chargement étant commandés par les événements ou de manière déterministe.

7. Procédé selon la revendication 6, **caractérisé en ce que** les événements détectés sont l'arrivée de paquets de données (P1 à P9) et que le cycle d'écriture se poursuit en étant cadencé par les événements détectés et le cycle de chargement par une horloge constante (CLOCK).

8. Générateur d'élément aléatoire (RANDOM) pour un dispositif (SE), **caractérisé en ce que** le générateur d'élément aléatoire (RANDOM) est doté d'un dispositif de représentation pour la détection des événements non déterministes qui se produisent déjà pendant le fonctionnement du dispositif (SE) et que le dispositif de représentation est configuré de telle sorte qu'il génère un élément aléatoire à partir des événements au moyen d'une instruction d'affectation.

9. Composant système (SE) pour un système de télécommunication comprenant un générateur d'élément aléatoire (RANDOM), **caractérisé en ce que** le générateur d'élément aléatoire (RANDOM) est doté d'un dispositif de représentation pour la détection des événements non déterministes qui se produisent déjà pendant le fonctionnement du dispositif (SE) et que le dispositif de représentation est configuré de telle sorte qu'il génère un élément aléatoire à partir des événements au moyen d'une instruction d'affectation.

10. Composant système selon la revendication 9, **caractérisé en ce que** le composant système est un réseau de connexion.

11. Composant système selon la revendication 9, **caractérisé en ce que** le composant système est un élément de connexion.
